(19) Europäisches Patentamt
European Patent Office
Office européen des brevets

(11) Veröffentlichungsnummer: **0 121 914**
**B1**

(12) **EUROPÄISCHE PATENTSCHRIFT**

(45) Veröffentlichungstag der Patentschrift: **10.08.88**

(51) Int. Cl.⁴: **C 07 F 7/08**

(21) Anmeldenummer: **84103828.4**

(22) Anmeldetag: **06.04.84**

# (54) Verfahren zur Herstellung von asymmetrischen Disiloxanen.

(30) Priorität: **08.04.83 DE 3312737**

(43) Veröffentlichungstag der Anmeldung: **17.10.84 Patentblatt 84/42**

(45) Bekanntmachung des Hinweises auf die Patenterteilung: **10.08.88 Patentblatt 88/32**

(84) Benannte Vertragsstaaten: **DE FR GB**

(56) Entgegenhaltungen:
**US-A-2 451 664**
**US-A-3 271 360**
**US-A-3 322 722**

(73) Patentinhaber: **WACKER- CHEMIE GMBH, Prinzregentenstrasse 22, D-8000 München 22 (DE)**

(72) Erfinder: **Preiner, Gerhard, Dr. Dipl.- Chem, Mehringerstrasse 56, D-8263 Burghausen (DE)**
Erfinder: **Müller, Johann, Friedrich- Eberth- Strasse 3, D-8263 Burghausen (DE)**

**EP 0 121 914 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Gemäß US-3 322 722 (ausgegeben 30. Mai 1967, Benjamin A. Eynon, Dow Corning Corporation) Beispiel 9 wird bei der Umsetzung von Hexamethyldisiloxan mit Dimethyldimethoxysilan in Gegenwart von Toluolsulfonsäure in mäßiger Ausbeute Pentamethyldisiloxan im Gemisch mit Trimethylmethoxysilan und Octamethyltrisiloxan erhalten. Es bestand daher die Aufgabe asymmetrische Disiloxane in besserer Ausbeute als nach dem bisher bekannten Verfahren herzustellen. Diese Aufgabe wird durch die Erfindung gelöst.

Gegenstand der Erfindung ist ein Verfahren zur Herstellung von asymmetrischen Disiloxanen, dadurch gekennzeichnet, daß ein (a) Silan mit drei Si-gebundenen, einwertigen organischen Resten, von denen mindestens einer durch Si-gebundenen Wasserstoff ersetzt sein kann, und einem SiOC-gebundenen, einwertigen organischen Rest, Wasser und ein (b) symmetrisches Disiloxan, das sich durch die Art mindestens zweier gleicher Substituenten von dem Disiloxan unterscheidet, welches die Hydrolyse des Silans (a) ergeben würde, und vor Zugabe des Silans (a) hergestellt wurde, in Gegenwart von Säure miteinander umgesetzt werden.

Es können also nach dem erfindungsgemäßen Verfahren ein (a) Silan der Formel

$R_3\ SiOR^1$,

wobei die R untereinander gleich oder verschieden sein können und Wasserstoff oder einwertige, SiC-gebundene organische Reste bedeuten und $R^1$ den SiOC-gebundenen, einwertigen organischen Rest bedeutet, Wasser und ein (b) Disiloxan der Formel

$R_n'\ R_{3-n}\ SiOSiR_{3-n}R_n'$,

wobei R die oben dafür angegebene Bedeutung hat, R' zwar die gleiche Bedeutung hat wie R, aber von R verschieden ist und n 1, 2 oder 3, vorzugsweise 1, ist, in Gegenwart von Säure miteinander umgesetzt werden.

Bevorzugte Beispiele für organische Reste R und R' sind Alkylreste mit 1 bis 3 Kohlenstoffatomen je Rest, wie der Methyl-, Ethyl- und n-Propylrest, Alkenylreste mit 1 bis 3 Kohlenstoffatomen je Rest, wie der Vinyl- und Allylrest, sowie substituierte Kohlenwasserstoffreste mit 1 bis 6 Kohlenstoffatomen je Rest, wie der Chlormethyl-, gamma-Chlorpropyl- und der gamma-Methacryloxypropylrest.

Vorzugsweise ist $R^1$ aus Kohlenstoff, Wasserstoff und gegebenenfalls Sauerstoff aufgebaut. Bevorzugte Beispiele für $R^1$ sind der Methyl-, Ethyl-, Propyl-, Isopropyl-, tert.-Butyl- und Methoxyethylenrest sowie der Acetylrest.

Gemäß einer bevorzugten Ausführungsform des erfindungsgemäßen Verfahrens wird als Silan (a) solches der Formel

$(CH_3)_3SiOR^1$,

wobei $R^1$ die oben dafür angegebene Bedeutung hat, und als Disiloxan (b) Tetramethyldisiloxan, also das Disiloxan der Formel

$H(CH_3)_2SiOSi(CH_3)_2H$

verwendet und so als asymmetrisches Disiloxan Pentamethyldisiloxan, also das Disiloxan der Formel

$(CH_3)_3SiOSi(CH_3)_2H$,

hergestellt.

Ein weiteres Beispiel für eine erfindungsgemäße Umsetzung ist diejenige von Vinyldimethylethoxysilan, Wasser und Hexamethyldisiloxan miteinander in Gegenwart von Säure.

Ob es zweckmäßiger ist, als Silicium enthaltende Reaktionsteilnehmer z. B. Allyldimethoxysilan und Hexamethyldisiloxan oder aber z. B. Trimethylethoxysilan und 1,3-Diallyl-1,1,3,3-tetramethyldisiloxan zu verwenden, kann durch einfache Versuche festgestellt werden.

Vorzugsweise beträgt das Molverhältnis von jeweils eingesetztem Silan (a), also z. B. von Trimethylethoxysilan, zu jeweils eingesetztem Disiloxan (b), also z. B. Tetramethyldisiloxan, 2 : 1 bis 4 : 1. Ist das Molverhältnis von jeweils eingesetztem Silan (a) zu jeweils eingesetztem Disiloxan (b) kleiner als 2 : 1, so sind die Ausbeuten nicht optimal. Grössere Molverhältnisse von jeweils eingesetztem Silan (a) zu jeweils eingesetztem Disiloxan (b) ergeben keine zusätzlichen Vorteile.

Die jeweils eingesetzte Menge an Wasser beträgt vorzugsweise 0,5 Mol bis 1,5 Mol je Mol Silan (a). Ist das Molverhältnis von Wasser zu Silan (a) kleiner als 0,5 : 1, so sind die Ausbeuten nicht optimal. Größere Molverhältnisse von Wasser zu jeweils eingesetztem Silan (a) als 1,5 : 1 ergeben keine zusätzlichen Vorteile.

Als Säure, in deren Gegenwart das erfindungsgemäße Verfahren durchgeführt wird, werden vorzugsweise Protonensäuren mit einem negativen Logarithmus der Säurekonstante ($pK_s$ oder $pK_a$, vgl. H.R. Christen "Grundlagen der allgemeinen und anorganischen Chemie", Frankfurt/Main, 1973, Seite 354) von höchstens 1 verwendet. Beispiele für derartige Säuren sind Chlorwasserstoff, Schwefelsäure und Phosphorsäure, wobei Chlorwasserstoff besonders bevorzugt ist, weil er in Gegenwart von Wasser nur wenig äquilibrierend wirkt und besonders leicht zugänglich ist.

Säure wird vorzugsweise in Mengen von 0,01 bis 2 Gewichtsprozent, insbesondere 0,1 bis 1 Gewichtsprozent, jeweils bezogen auf das Gesamtgewicht von Silan, Wasser, Disiloxan und Säure, verwendet.

Vorzugsweise wird das erfindungsgemäße Verfahren bei -10° C bis 50° C, insbesondere 0° bis 25° C durchgeführt, um eine unerwünschte Äquilibrierung zu vermeiden.

Weiterhin ist es bevorzugt, das erfindungsgemäße Verfahren absatzweise durchzuführen und das Silan (a) zu einem Gemisch aus Wasser, Disiloxan (b) und Säure zu geben.

Schließlich ist es bevorzugt, möglichst bald nach Beendigung der erfindungsgemäßen Umsetzung die Säure zu neutralisieren, beispielsweise durch Zugabe von Natriumhydrogencarbonat. Dann kann das Gemisch mit Wasser gewaschen und das Disiloxan getrocknet und durch Destillation gereinigt werden.

Bei dem erfindungsgemäßen Verfahren können Ausbeuten von 80 bis 95 Gewichtsprozent der theoretisch möglichen Ausbeute erzielt werden.

**Beispiel**

Zu einem zunächst bei 0° C befindlichen Gemisch, das aus 1340 g (10 Mol) Tetramethyldisiloxan, 220 g 1-n-HCl und 140 g Wasser bereitet wurde, das also 0,47 Gewichtsprozent HCl enthält, werden unter Rühren 2360 g (20 Mol) Trimethylethoxysilan tropfenweise mit solcher Geschwindigkeit zugegeben, daß die Temperatur nicht über 5° C steigt. Sofort nach Beendigung der Zugabe des Trimethylethoxysilans wird die Säure durch Zugabe von 40 g Natriumhydrogencarbonat neutralilisiert. Das so erhaltene Gemisch wird fünfmal mit je 500 g Wasser gewaschen und mit Natriumsulfat getrocknet. Das so erhaltene Gemisch besteht gemäß $^1$H-NMR-Spektrum zu 90 Molprozent aus Pentamethyldisiloxan und zu 10 Molprozent aus Hexamethyldisiloxan. Durch fraktionierte Destillation in einer Füllkörperkolonne werden 2350 g (80 Gewichtsprozent d.Th.) Pentamethyldisiloxan erhalten.

**Patentansprüche**

1. Verfahren zur Herstellung von asymmetrischen Disiloxanen,
dadurch gekennzeichnet,
daß ein (a) Silan mit drei SiC-gebundenen, einwertigen organischen Resten, von denen mindestens einer durch Si-gebundenen Wasserstoff ersetzt sein kann, und einem SiOC-gebundenen, einwertigen organischen Rest, Wasser und ein (b) symmetrisches Disiloxan, das sich durch die Art mindestens zweier gleicher Substituenten von dem Disiloxan unterscheidet, welches die Hydrolyse des Silans (a) ergeben würde, und vor Zugabe des Silans (a) hergestellt wurde, in Gegenwart von Säure miteinander umgesetzt werden.

2. Verfahren nach Anspruch 1,
dadurch gekennzeichnet,
daß als Silan (a) solches der Formel

$(CH_3)_3SiOR^1$,

wobei $R^1$ einen aus Kohlenstoff, Wasserstoff und gegebenenfalls Sauerstoff aufgebauten, einwertigen organischen Rest bedeutet, und als Disiloxan (b) Tetramethyldisiloxan verwendet wird.

3. Verfahren nach Anspruch 1 oder 2,
dadurch gekennzeichnet,
daß das Molverhältnis von jeweils eingesetztem Silan zu jeweils eingesetztem Disiloxan 2 : 1 bis 4 : 1 beträgt.

4. Verfahren nach mindestens einem der Ansprüche 1 bis 3,
dadurch gekennzeichnet,
daß als Säure eine Protonensäure mit einem $pK_S$-Wert von höchstens 1 verwendet wird.

5. Verfahren nach Anspruch 1 bis 4,
dadurch gekennzeichnet,
daß als Protonensäure Chlorwasserstoff verwendet wird.

6. Verfahren nach mindestens einem der Ansprüche 1 bis 5,
dadurch gekennzeichnet,
daß es bei -10° C bis 25° C durchgeführt wird.

7. Verfahren nach mindestens einem der Ansprüche 1 bis 6,
dadurch gekennzeichnet,
daß das Silan (a) zu einem Gemisch aus Wasser, Disiloxan (b) und Säure gegeben wird.

**Claims**

1. Process for the preparation of asymmetric disiloxanes, characterized in that a silane (a) having three SiC-linked, monovalent organic radicals, at least one of which can be replaced by Si-linked hydrogen, and having one SiOC-linked, monovalent organic radical, water and a symmetrical disiloxane (b) which differs in regard to the nature of at least two identical substituents from the disiloxane that would be produced by the hydrolysis of the silane (a), and which has been prepared before the addition of the silane (a), are reacted together in the presence of acid.

2. Process according to Claim 1, characterized in that the silane (a) used is a silane of the formula

(CH3)3SiOR$^1$

in which $R^1$ denotes a monovalent organic radical composed of carbon, hydrogen and, if appropriate, oxygen, and the disiloxane (b) used is tetramethyldisiloxane.

3. Process according to Claim 1 or 2, characterized in that the molar ratio of the silane employed in a particular case to the disiloxane

employed in a particular case is 2 : 1 to 4 : 1.

4. Process according to at least one of Claims 1 to 3, characterized in that the acid used is a proton acid having a $pK_s$ value not higher than 1.

5. Process according to Claim 1 to 4, characterized in that the proton acid used is hydrogen chloride.

6. Process according to at least one of Claims 1 to 5, characterized in that it is carried out at -10° C to 25° C.

7. Process according to at least one of Claims 1 to 6, characterized in that the silane (a) is added to a mixture of water, disiloxane (b) and acid.

**Revendications**

1. Procédé pour préparer des disiloxanes asymétriques, caractérisé en ce qu'on fait réagir ensemble, en présence d'un acide, (a) un silane contenant au moins trois radicaux organiques univalents liés au silicium par une liaison du type SiC, dont l'un au moins peut être remplacé par un hydrogène lié à Si, et un radical organique univalent lié à Si par une liaison du type SiOC, de l'eau et (b) un disiloxane symétrique qui diffère, par la nature d'au moins deux substituants identiques, du disiloxane que donnerait l'hydrolyse du silane (a), et qui a été préparé avant l'addition du silane (a).

2. Procédé selon la revendication 1 caractérisé en ce qu'on utilise, comme silane (a), un composé répondant à la formule:

$(CH_3)_3SiOR^1$

dans laquelle $R^1$ représente un radical organique univalent constitué de carbone, d'hydrogène et, éventuellement, d'oxygène, et, comme disiloxane (b), le tétraméthyl-disiloxane.

3. Procédé selon l'une des revendications 1 et 2, caractérisé en ce que le rapport molaire du silane mis en jeu au disiloxane mis en jeu est compris entre 2 : 1 et 4 : 1.

4. Procédé selon l'une quelconque des revendications 1 à 3, caractérisé en ce qu'on utilise, comme acide, un acide protonique qui a un $pK_a$ au plus égal à 1.

5. Procédé selon l'une quelconque des revendications 1 à 4, caractérisé en ce qu'on utilise le chlorure d'hydrogène comme acide protonique.

6. Procédé selon l'une quelconque des revendications 1 à 5, caractérisé en ce qu'on opère à une température de -10 à 25° C.

7. Procédé selon l'une quelconque des revendications 1 à 6, caractérisé en ce qu'on ajoute le silane (a) à un mélange d'eau, d'un disiloxane (b) et d'un acide.